# EUROPEAN PATENT APPLICATION

(11) **EP 4 525 192 A1**
(43) Date of publication of application: **19.03.2025**
(21) Application number: 24197808.9
(22) Date of filing: 02.09.2024
(51) Int. Cl.: H01M 50/528, H01M 50/533, H01M 50/536

(54) **BATTERY AND BATTERY PACK**

(30) Priority: 15.09.2023 CN 202322522057 U
(71) Applicant: CALB Group Co., Ltd., Changzhou City, Jiangsu Province (CN)
(72) Inventor: ZHAO, Luhan, Changzhou City (CN); XU, Bowei, Changzhou City (CN); XU, Yunhui, Changzhou City (CN); SHAO, Junhua, Changzhou City (CN)
(74) Representative: Becker, Eberhard

(57) **Abstract**

A battery and a battery pack having the battery are provided. The battery includes an electrode output end and at least one layer of a composite current collector (1) having a tab region (101), the tab region (101) and the electrode output end being welded by resistance welding. A plurality of spaced projections protruding (202) towards the tab region (101) are provided on a welding surface (201) of the electrode output end, the projections (202) are welded to the tab region (101), a projected area of a single projection (202) on the welding surface (201) is A, a minimum pitch between edges of two adjacent projections is B, and a square of the projected area A and the minimum pitch B satisfies the relational expression of 0.5≤A/B²≤20.

## Description

### BACKGROUND

### Technical Field

The present disclosure relates to the technical field of batteries, and in particular to a battery and a battery pack.

### Description of Related Art

The current collector is a key auxiliary material of lithium ion battery, and the main function is to conduct electricity. The process of converting chemical energy into electric energy is realized by collecting the current generated by the active substances of the battery to form a larger current output. The current collector serves both as a carrier for the cathode and anode active materials and as a collector and conductor for the cathode and anode electrons, and functions to collect the current generated by the active substances of the battery to produce a greater output current. Therefore, ideal current collectors often need to have high conductivity, good stability, good mechanical strength, low cost and other comprehensive properties.

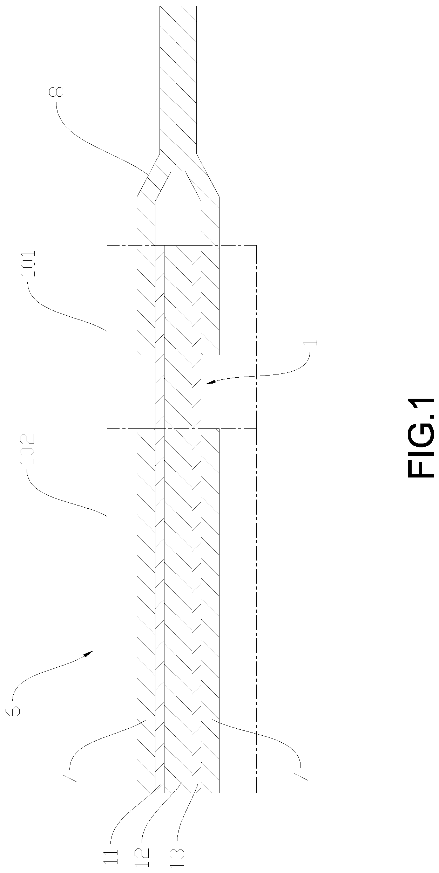

Based on the idea of reducing cost and increasing efficiency, a composite current collector has been developed. The composite current collector is generally of a sandwich structure, specifically including a conductive layer, a polymer substrate layer and a conductive layer, and has a high safety. However, since the polymer substrate layer is non-conductive, the conductive layers on both sides of the polymer substrate layer are not conductive, thus failing to ensure the normal use of a battery. Therefore, in the prior art, as shown in figure 1, a conductive extension piece 8 is welded on two conductive layers 11 and 13 of a tab region 101 of a composite current collector 1 (in this case, the conductive extension piece 8 serves as a tab) so as to solve the problem that two sides of the composite current collector 1 cannot be conducted is solved, and then a plurality of conductive extension pieces 8 are laminated and then welded to the electrode output end, thereby ensuring the normal use of the battery. However, due to the addition of the conductive extension pieces 8, the stacked application of the multiple layers of the composite current collector 1 will result in an increase in the overall weight thereof and may also result in the disadvantages of an increase in the overall thickness, a decrease in energy density, an increase in cost, etc.

Therefore, it is necessary to study a new solution of how to realize the direct conduction between the two conductive layers and the electrode output end.

### SUMMARY

In order to overcome at least one of the above-mentioned disadvantages of the prior art, a battery is provided by the present disclosure, which has small overall volume, low weight, high energy density, low production cost and good overall performance.

The technical solution adopted by the present disclosure to solve the problem thereof is described in the following contents.

A battery includes an electrode output end and at least one layer of a current collector having a tab region, the tab region and the electrode output end being welded by resistance welding, wherein a plurality of spaced projections protruding towards the tab region are provided on a welding surface of the electrode output end, the projections are welded to the tab region, a projected area of a single projection on the welding surface is A, a minimum pitch between edges of two adjacent projections is B, and a square of the projected area A and the minimum pitch B satisfies the relational expression of 0.5≤A/B²≤20.

In the battery provided by the present disclosure, the tab region of the current collector is directly welded to the electrode output end by resistance welding, so as to realize current collection, without adding a conductive extension piece, and the battery has a small overall volume, a low weight and a high energy density; on the other hand, a plurality of spaced projections are provided, and the square of the projected area A and the minimum pitch B is controlled to satisfy the relational expression of 0.5≤A/B²≤20, so as to ensure that the projections have sufficient current flow capacity in the welding region per unit area, and the tab region and the electrode output end can be welded and fixed, and at the same time, the failure of electrical connection caused by the fusing of the conductive layers of the current collector caused by local overheating due to the excessively small pitch between adjacent projections during charging and discharging at a large current can be avoided, and the phenomenon of spattering of welding slag during welding caused by the excessively concentrated heat can be avoided.

Based on the same concept, the present disclosure further discloses a battery pack having the battery described.

### BRIEF DESCRIPTION OF THE DRAWINGS

Figure 1 is a schematic cross-sectional diagram of welding of one conductive extension piece on two conductive layers in the prior art;
Figure 2 is a schematic cross-sectional diagram of a connection between an electrode output end and a composite current collector of an embodiment of the present disclosure;
Figure 3 is a schematic structural diagram of a pole of an embodiment of the present disclosure; and
Figure 4 is a bottom schematic diagram of the pole of an embodiment of the present disclosure.

The reference numerals have the following meanings:
1, composite current collector; 101, tab region; 102, active substance region; 11, first conductive layer; 12, polymer substrate layer; 13, second conductive layer; 201, welding surface; 202, projection; 203, rounded angle; 2, pole; 21, welding pad; 22, post; 6, plate; 7, active substance layer; 8, conductive extension piece.

### DESCRIPTION OF THE EMBODIMENTS

For better understanding and applications, the technical solutions of the embodiments of the present disclosure will now be described clearly and fully hereinafter with reference to the accompanying drawings, in which embodiments of the present disclosure are shown.

In the description of the present disclosure, it should be noted that the orientations or positional relationships indicated by the terms "upper", "lower", "front", "rear", "left", "right", "vertical", "horizontal", "top", "bottom", "inner", "outer", etc. are based on the orientations or positional relationships shown in the drawings, merely to facilitate the description of the present disclosure and simplify the description, not to indicate or imply that the devices or elements referred to must have a particular orientation, be constructed and operated in a particular orientation, and thus should not be construed as limiting the present disclosure.

Unless otherwise defined, all technical and scientific terms used herein have the same meaning as commonly understood by a person skilled in the art to which the present disclosure belongs. The terminology used in the description of the present disclosure herein is for the purpose of describing particular embodiments only and is not intended to be limiting of the present disclosure.

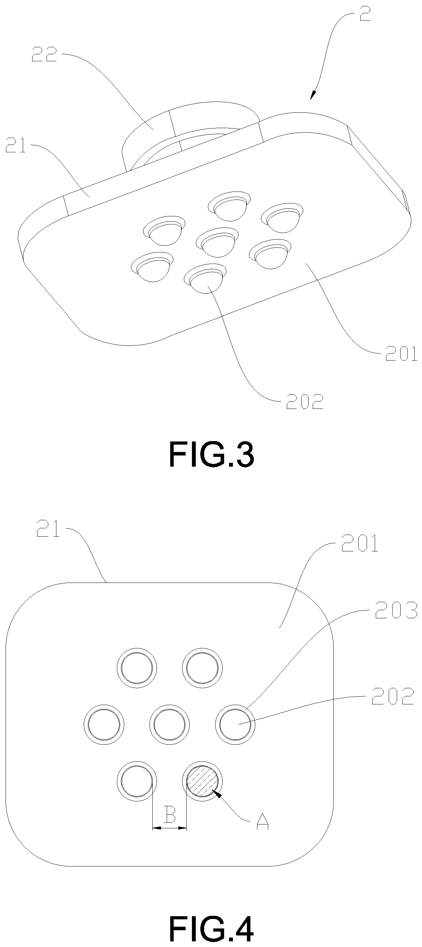

The present disclosure discloses a battery, including an electrode output end and a plurality of layers of tabs. With reference to figure 3 and figure 4, the present disclosure further discloses a battery pack having the battery. The electrode output end includes a pole 2, and the pole 2 includes a welding pad 21 and a post 22 connected, wherein the welding pad 21 is configured for welding with the plurality of layers of tabs by resistance welding, and the post 22 is configured for conducting electricity outwards. Preferably, the electrode output end has a welding surface 201, and is based on connecting the plurality of layers of tabs with the pole 2, the welding surface 201 at this time is a side surface, facing the plurality of layers of tabs, of the welding pad 21 and the welding surface 201 is provided with a plurality of spaced projections 202 protruding towards the tab region 101, and the projections 202 are welded with the plurality of layers of tabs. The significance of the provision of the projections 202 is that, in terms of resistance welding, in order to ensure the welding temperature at the time of welding, a current flow area can be reduced by the projections 202 provided on the welding surface 201 to achieve higher heat generation under the same current flow.

With reference to figure 4, in particular, a projected area of a single projection 202 on the welding surface 201 is A, a minimum pitch between edges of two adjacent projections 202 is B, and a square of the projected area A and the minimum pitch B satisfies the relational expression of 0.5≤A/B²≤20. So designed, when the projections 202 and the plurality of layers of tabs are resistance welded, it is ensured that the projections have sufficient current flow capacity in the welding region per unit area, and the tab region and the electrode output end can be welded and fixed, and at the same time, the failure of electrical connection caused by the fusing of the conductive layers of the current collector caused by local overheating due to the excessively small pitch between adjacent projections during charging and discharging at a large current can be avoided.

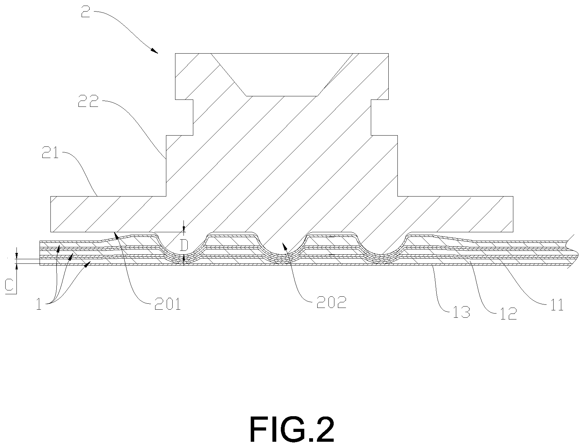

With reference to figure 2 to figure 4, as a preferred embodiment, a battery includes an electrode output end and a plurality of stacked layers of a composite current collector 1. As is known, with reference to figure 1, a composite current collector 1 has an active substance region 102 and a tab region 101, and the composite current collector 1 includes a first conductive layer 11, a polymer substrate layer 12 and a second conductive layer 13, wherein the first conductive layer 11 and the second conductive layer 13 are respectively attached to two opposite side surfaces of the polymer substrate layer 12 so as to form a "sandwich" structure, wherein a part of a surface of the composite current collector 1 serves as the active substance region 102 for attaching the active substance layer 7, and a part of the surface of the composite current collector 1 is exposed so as to serve as the tab region 101 (which may also be referred to as an foil-free region).

Preferably, the tab region 101 and the electrode output end of the composite current collector 1 are welded by resistance welding, and during the resistance welding process, the electrode output end is adhered to an outer side of the composite current collector 1 of an outer layer. The composite current collector 1 at a to-be-welded position is heated and pressurized, and the polymer substrate layer 12 is fused and pressed to the periphery, so that the first conductive layer 11 and the second conductive layer 13 are in contact and conduct electricity, and then two conductive layers 11, 13 of the composite current collector 1 are directly welded together with the electrode output end (namely, the tab regions 101 of the plurality of layers of composite current collector 1 are stacked and then directly welded to the electrode output end by resistance welding) so as to achieve current collection, and in this way, there is no need to add a conductive extension piece 8, the overall volume is small, the weight is low, and the energy density is high; at the same time, the welding efficiency of the direct resistance welding is much higher than the welding efficiency of welding the electrode output end after splicing the conductive extension piece 8 in the prior art, and the production materials can be reduced, with great advantages in terms of production costs.

In particular applications, the active substance layer 7 can be coated on a surface side of the active substance region 102 of the composite current collector 1 so as to constitute a plate 6 in the battery, the tab region 101 of the composite current collector 1 constitutes a tab of the plate 6, and the plates 6 are stacked in a plurality of layers, namely, the composite current collector 1 is stacked in a plurality of layers, wherein, in particular, the tab regions 101 of the plurality of layers of composite current collector 1 are stacked; the aforementioned welding of the tab region 101 of the composite current collector 1 and the electrode output end by resistance welding can also be understood as welding of the tab of the plate 6 and the electrode output end by resistance welding.

It needs to be stated that, in practical use, an overall thickness of a single-layer composite current collector 1 is relatively thin, and when applied to a battery, several tens of layers are often stacked. Therefore, in order to facilitate understanding, in figure 2, the quantity of layers of the composite current collector 1 is schematically shown in three layers, which does not mean that the present disclosure defines the quantity of layers of the composite current collector 1.

In other examples, it is also possible that only part of the tabs of the plate in the battery are in the configuration of the composite current collector 1, or that the plate in a winding-type battery may have only two layers, i.e. the composite current collector 1 may be one layer, two layers, etc. without being limited thereto. In addition, the quantity of layers of the composite current collector 1 is not necessarily the same as the quantity of layers of the tab region 101, and particularly in a winding-type battery, a plurality of tab regions 101 may be punched on the composite current collector 1 applied thereto, and after winding, the plurality of tab regions 101 are overlapped, and the overlapped plurality of layers of tab regions 101 satisfy the above-mentioned characteristics.

With reference to figure 2 and figure 3, as a specific example, the electrode output end includes a pole 2 including a welding pad 21 for welding with the tab region 101 of the composite current collector 1 by resistance welding and a post 22 for conducting electricity to the outside, wherein the welding pad 21 and the pole 22 are connected.

Of course, in other embodiments, the electrode output end can also adopt other known structures, and the specific structure of the electrode output end of the present disclosure is not limited. In addition, in the structure in which the electrode output end is resistance-welded to the tab region 101 of the composite current collector 1, the electrode output end may also be resistance-welded to the tab region 101 of the composite current collector 1 using a member such as a bus plate or an adapter piece.

Of course, it is preferable that resistance welding to the tab region 101 of the composite current collector 1 is realized via the welding pad 21 of the post 2.

With reference to figure 2 and figure 3, it is preferred that the electrode output end has a welding surface 201 and is based on being connected to the tab region 101 with the pole 2, wherein the welding surface 201 at this time is a side surface, facing the tab region 101, of the welding pad 21, the welding surface 201 is provided with a plurality of spaced projections 202 protruding towards the tab region 101, the projections 202 are welded with the tab region 101, the projections 202 serve as main parts for resistance welding with the tab region 101 of the composite current collector 1, and at this moment, the post 22 and the projections 202 are respectively provided on two opposite sides of the welding pad 21. Specifically, the post 22 is provided on a side, facing away from the tab region 101, of the welding pad 21 and the projections 202 are provided on a side, facing the tab region 101, of the welding pad 21.

The significance of the provision of the projections 202 is that, in terms of resistance welding, in order to ensure the welding temperature at the time of welding, a current flow area can be reduced by the projections 202 provided on the welding surface 201 to achieve higher heat generation under the same current flow; meanwhile, since there is a non-conductive polymer substrate layer 12 in the middle of the composite current collector 1, during the resistance welding, the composite current collector 1 can be pressurized and heated by the projections 202, so that the polymer substrate layer 12 in the composite current collector 1 at a position corresponding to the projections 202 is melted and extruded to the periphery, such that the first conductive layer 11 and the second conductive layer 13 on both sides of the polymer substrate layer 12 are in contact and conduct electricity, and the welding and fixing can be completed.

With reference to figure 4, in particular, a projected area of a single projection 202 on the welding surface 201 is A, a minimum pitch between edges of two adjacent projections 202 is B, and a square of the projected area A and the minimum pitch B satisfies the relational expression of 0.5≤A/B²≤20.

The inventors have found the following problems upon study: if the A/B² ratio is too small, in the welding region per unit area, a welding area of the composite current collector 1 and the welding surface 201 is too small, and the current flow capacity is poor, especially when the battery is charged and discharged at a large current so that the temperature at the projections 202 is too high, which may cause the conductive layers 11, 13 around the projections 202 to melt and cause a failure of electrical connection; if the A/B² ratio is too large, in the welding region per unit area, there is not enough space between adjacent projections 202 to accommodate the polymer material extruded at the projections 202, resulting in the polymer material being extruded in a thickness direction of the composite current collector 1. A thickness difference between the projections 202 and the surrounding composite current collector 1 is large, and when the plurality of layers of the composite current collector 1 are stacked, the composite current collector 1 of the outer layer has a large shear force at the projections 202, so that the problem of tearing off easily occurs.

Therefore, in the present disclosure, a plurality of projections 202 are spaced, and the square of the projected area A and the minimum pitch B is controlled to satisfy the relational expression of 0.5≤A/B²≤20, so as to ensure that the projections 202 have a sufficient current flow capacity in the welding region per unit area so as to avoid the failure of electrical connection caused by the fusing of the conductive layers 11, 13 caused by local overheating during charging and discharging at a large current, and at the same time, when the polymer substrate layer 12 corresponding to the position of the projections 202 is melted and extruded, sufficient space is allowed between the adjacent projections 202 for accommodating the extruded polymer material, which is convenient for controlling the thickness difference to ensure that the composite current collector 1 of the outer layer does not tear off.

Preferably, 0.8≤A/B²≤8, in order to achieve better performance.

Preferably, the projected area A is between 0.6 mm² and 9 mm² to ensure that the individual projections 202 do not penetrate the conductive layers 11, 13 and to control the amount of polymer material that the individual projections 202 melt and extrude within a suitable range. More preferably, the projected area A is between 1.2 mm² and 5 mm².

With reference to figure 2, preferably, a thickness of the polymer substrate layer 12 in the composite current collector 1 is C, a height of the projections 202 is D, and a quantity of layers of the composite current collector 1 is n, 1.2≤D/(C*n)≤10. In the course of the study, the thicker the thickness C of the polymer substrate layer 12, the greater the quantity n of layers of the composite current collector 1 (which can also be understood as the greater the quantity of layers of the tabs), and the greater the amount of the polymer material to be melt-extruded, the greater the amount of the space required to accommodate the polymer material in a push-stacking direction (which can also be understood as the thickness direction of the tab), that is, the greater the height D of the projections 202 required. Therefore, in the present solution, by defining the relationship of the three parameters of the thickness C, the height D and the quantity of layers n to satisfy 1.2≤D/(C*n)≤10 so as to satisfy that the space between adjacent projections 202 is sufficient to accommodate the polymer material to be melt-extruded, ensuring that the height of the proj ections 202 is within a suitable range to reduce the occupation of the height space of the battery and to reduce the volume.

With reference to figure 2 and figure 4, in the present embodiment, the projected shape of the projections 202 on the welding surface 201 is circular or quasi-circular, such that the polymer material in the composite current collector 1 can be uniformly diffused in all directions around the projections 202 after being melted.

As a specific example, the projections 202 have a substantially hemispherical shape, so that, during heating and pressing the composite current collector 1, the deformation of the conductive layers 11, 13 corresponding to the position of the projections 202 has a relatively compliant arc shape, so that the tearing of the conductive layers 11, 13 caused by the concentration of deformation stress is avoided, and the melt-extruded polymer material can be uniformly extruded towards the periphery of the projections 202, so that a local bulge being too high is avoided.

Further preferably, a rounded angle 203 is formed at a connection edge of the projections 202 and the welding surface 201 to avoid stress concentration.

In other examples, the projection 202 may be oval, or cylindrical, or prismatic, or truncated, without limitation.

It should be noted that during resistance welding, an end of the projection 202 may be melted and deformed, resulting in a shape change of the end of the projection 202, which does not affect the function and effect of extruding the polymer material.

As a specific example, the projections 202 are provided in seven, one projection 202 is located in the middle, and the remaining six projections 202 are arranged in a lattice of equidistant circumference around the projection 202 in the middle, a radius of the projection 202 can be 0.7 mm, and therefore the projected area A ≈ 1.54 mm², the height of the projection 202 D=0.7 mm, and the minimum pitch B between the edges of two adjacent projections 202 can be 1.2 mm, and at this time, A/B² ~1.07; taking the composite current collector 1 of stacked 80 layers as an example, for example, the overall thickness of the single-layer composite current collector 1 is about 8 µm, and the thickness of the polymer substrate layer 12 thereof is about 6 µm, and at this time D/(C*n)~1.46.

Of course, the plurality of projections 202 may also be arranged in a matrix-type lattice. The quantity of the projections 202 is set according to actual needs, and the present disclosure does not define the specific quantity of the projections 202.

The technical means disclosed in the solutions of the present disclosure are not only limited to the technical means disclosed in the above-mentioned implementations, but also comprise technical solutions composed of any combination of the above-mentioned technical features. It should be noted that a person skilled in the art would have been able to make several improvements and modifications without departing from the principles of the present disclosure, and these improvements and modifications are also considered to be within the scope of the present disclosure.

## Claims

1. A battery, **characterized by** comprising an electrode output end and at least one layer of a current collector (1) having a tab region (101), the tab region (101) and the electrode output end being welded by resistance welding,
wherein a plurality of spaced projections (202) protruding towards the tab region (101) are provided on a welding surface (201) of the electrode output end, the projections (202) are welded to the tab region (101), a projected area of a single projection (202) on the welding surface (201) is A, a minimum pitch between edges of two adjacent projections (202) is B, and a square of the projected area A and the minimum pitch B satisfies the relational expression of 0.5≤A/B²≤20.

2. The battery according to claim 1, **characterized in that** the current collector (1) is a composite current collector.

3. The battery according to claim 2, **characterized in that** the composite current collector (1) comprises a polymer substrate layer (12) and two conductive layers (11, 13) provided on two opposite sides of the polymer substrate layer (12), a thickness of the polymer substrate layer (12) is C, a height of the projection (202) is D, and a quantity of layers of the composite current collector (1) is n, 1.2≤D/(C*n)≤10.

4. The battery according to claim 1, **characterized in that** the projected area A is between 0.6 mm² and 9 mm².

5. The battery according to any one of claims 1 to 4, **characterized in that** the plurality of the projections (202) are arranged in a lattice.

6. The battery according to any one of claims 1 to 4, **characterized in that** a projected shape of the single projection (202) on the welding surface (201) is circular or quasi-circular.

7. The battery according to claim 6, **characterized in that** a rounded angle (203) is formed at a connection edge of the projection (202) and the welding surface (201).

8. The battery according to any one of claims 1 to 4, **characterized in that** the electrode output end comprises a pole (2), the pole (2) comprises a welding pad (21) and a post (22), the welding surface (201) is a side surface, facing the tab region (101), of the welding pad (21), and the post (22) and the projection (202) are respectively provided on two opposite sides of the welding pad (21).

9. The battery according to any one of claims 1 to 4, **characterized in that** the battery comprises a plurality of stacked layers of composite current collectors (1) each having a tab region (101), the tab region (101) and the electrode output end being welded by resistance welding.

10. A battery pack, **characterized by** comprising the battery according to any one of claims 1 to 9.
